(19) Europäisches Patentamt
European Patent Office
Office européen des brevets

(11) Veröffentlichungsnummer: **0 208 853**
**A2**

(12) **EUROPÄISCHE PATENTANMELDUNG**

(21) Anmeldenummer: 86106113.3

(51) Int. Cl.⁴: **A01N 53/00**

(22) Anmeldetag: 05.05.86

(30) Priorität: 17.05.85 DE 3517707

(43) Veröffentlichungstag der Anmeldung:
21.01.87 Patentblatt 87/04

(84) Benannte Vertragsstaaten:
AT BE CH DE FR GB IT LI NL

(71) Anmelder: **BAYER AG**
**Konzernverwaltung RP Patentabteilung**
**D-5090 Leverkusen 1 Bayerwerk(DE)**

(72) Erfinder: **Dorn, Hubert, Dr.**
**Pahlkestrasse 71**
**D-5600 Wuppertal 1(DE)**
Erfinder: **Naik, Arundev Haribhai**
**Walter-Flex-Strasse 20**
**D-5090 Leverkusen 1(DE)**
Erfinder: **Stendel, Wilhelm, Dr.**
**In den Birken 55**
**D-5600 Wuppertal 1(DE)**
Erfinder: **Voege, Herbert, Dr.**
**Martin-Buber-Strasse 41**
**D-5090 Leverkusen 3(DE)**

(54) **Verfahren zum Freihalten von Stal- und Weidetieren von Fliegen.**

(57) Die vorliegende Erfindung betrifft ein Verfahren zum Freihalten von Stall-und Weidetieren von Fliegen durch Anwendung eines Mittels im Aufgießverfahren das Cyfluthrin und/oder Fenfluthrin als Wirkstoff enthält.

EP 0 208 853 A2

## Verfahren zum Freihalten von Stall-und Weidetieren von Fliegen

Die vorliegende Erfindung betrifft ein Verfahren zum Freihalten von Stall-und Weidetieren von Fliegen.

Stall-und Weidetiere sind oft großen Belästigungen durch Fliegen ausgesetzt. Die Tiere werden durch Fliegen direkt geschädigt, indem wie im Fall der Dasselfliege ein Teil der Entwicklung der Fliege im Tier stattfindet. Die Tiere werden aber auch indirekt geschädigt, indem sie durch die Fliegen beunruhigt und dadurch in ihrer Nahrungsaufnahme gestört werden. Dies kann zu Gewichtsverlusten und zu Verlusten bei der Milchproduktion führen.

Es ists bekannt gewesen, Schädlingsbekämpfungsmittel zum Schutz von Stall-und Weidetieren gegen Fliegen einzusetzen. Dabei werden die Tiere mit üblichen Zubereitungen bekannter Insektizide besprüht, getaucht oder topikal behandelt. Aus GB-PS 1 511 646 ist z.B. die Behandlung gegen Fliegen mit 3-Phenoxybenzyl-2,2-dimethyl-3-(2,2-dichlorvinyl)cyclopropan-1-carbonsäure-ester(Permethrin)bekannt. Die Wirkungsdauer, die mit einer derartigen Behandlung erreicht wird, ist jedoch nicht befriedigend.

Es war außerdem bekannt, Parasiten an warmblütigen Tieren durch Behandlung der Tiere mit pour-on oder spot-on-Formulierungen, die Decamethrin oder Cypermethrin als Wirkstoffe enthalten, zu bekämpfen (vgl. GB-PS 2 065 475, EP-OS 61 208). Ziel der Behandlungsmethoden war jedoch Insekten wie Läuse oder Acariden wie Zecken die an oder im Fell des Wirtstiers leben zu bekämpfen. Ober die Eignung dieser Mittel zum Schutz gegen Fliegen war nichts bekannt.

Gerade diese Anwendung ist besonders problematisch, da Fliegen nur kurzfristig zum Wirtstier kommen. Da Pyrethroide nicht systemisch wirken, d.h. nicht durch die Körperflüssigkeit des Wirtstiers verteilt werden, konnte nicht erwartet werden, daß die Wirkstoffe auch auf Schädlinge wirken, die nur kurzfristig auf der Oberfläche der Wirtstiere sitzen.

Es wurde gefunden, daß man Stall-und weidetiere von Fliegen freihalten kann, indem man sie im Aufgießverfahren mit einem Mittel behandelt, das 2,2-Dimethyl-3-(2,2-dichlorvinyl)-cyclopropan-1-carbonsäure-α-cyano-(3-phenoxy-4-fluor)-benzylester (Cyfluthrin) seine Isomeren, Enantiomeren oder ihre Gemische und/oder 2,2-Dimethyl-3-(2,2-dichlorvinyl)-cyclopropan-1-carbonsäurepentafluorbenzylester (Fenfluthrin) neben einem oder mehreren hautverträglichen Verdünnungsmitteln, gegebenenfalls in Gegenwart von Emulgatoren und weiteren Hilfsstoffen enthält.

Mittel dieser Zusammensetzung zeichnen sich vor allem durch ihre schnell einsetzende und sehr lang enhaltende Wirkung aus.

Das Aufgießverfahren ist eine an sich bekannte Methode zur Bekämpfung von Ektoparasiten an Tieren (N.M.Rogoff et al J.Econ (1960) S. 814-817). Die dabei eingesetzten Mittel sind als Pour-on-oder Spot-on-Mittel bekannt. Das Verfahren zeichnet sich durch seine leichte Anwendbarkeit aus. Es konnte jedoch nicht erwartet werden, daß Pour-on-oder Spot-on-Mittel auf Basis der nicht systemisch wirkenden Pyrethroide Cyfluthrin und/oder Fenfluthrin eine besonders gute und lang anhaltende Wirkung auf Fliegen an Stall-und Weidetieren besitzen.

Cyfluthrin ist Bekannt aus DE-OS 2 709 264 oder der entsprechenden GB-PS 1 565 932 und läßt sich durch die folgende Formel darstellen:

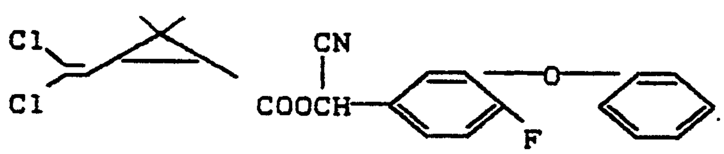

Fenfluthrin ist bekannt aus DE-OS 2 658 074 oder der entsprechenden GB-PS 1 567 820 und läßt sich durch die folgende Formel darstellen:

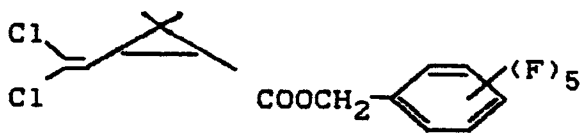

Stall-und Weidetiere, die durch das erfindungsgemäße Verfahren geschützt werden, sind Rinder, Pferde, Schafe, Ziegen und Schweine. Bevorzugt wird das erfindungsgemäße Verfahren bei Rindern und Schafen angewandt.

Fliegen vor denen Stall-und Weidetiere durch das erfindungsgemäße Verfahren geschützt werden, sind Insekten der Ordnung Diptera. Dazu gehören Simuliidae (Simuliden sp.), Tabanidae -(Tabanus sp.), Muscidae (Stomoxys calcitrans, Glossina sp., Lyperosia sp., Haematobiasp., Hydrotaea sp.), Calliphoridae (Lucilia sp., Chrysomyia sp., Calliphora sp., Callitroga sp.), Oestridae -(Hypoderma bovis, Hypoderma lineatum, Dermatobia hominis).

Besonders bevorzugt wird das erfindungsgemäße Verfahren gegen symbovine Fliegen wie Stomaxys calcitrans, Haematobia irritans Lyperosia exigua angewandt.

Die Mittel, die im erfindungsgemäßen Verfahren eingesetzt werden, enthalten je 0,01-10 % Cyfluthrin und/oder Fenfluthrin. Bevorzugt ist ein Gehalt von je 0,01-5 % Cyfluthrin und/oder Fenfluthrin. (Alle %-Angaben beziehen sich auf Gewichtsprozent). Enthalten die Mittel beide Wirkstoffe, so liegen diese im Verhältnis Fenfluthrin zu Cyfluthrin wie 1:0,3 bis 1:3 vor, bevorzugt ist das Verhältnis 1:1.

Die Mittel werden in an sich bekannter Weise hergestellt indem der Wirkstoff oder Mischungen der Wirkstoffe in einem oder mehreren hautverträglichen Verdünnungsmitteln gelöst oder suspendiert und gegebenenfalls weitere Hilfsstoffe zugesetzt werden.

Geeignete Verdünnungsmittel sind Alkohole, wie Ethylalkohol, Isopropylalkohole, n-Butylalkohol, Amylalkohol, Octanol.

Glykole, wie Propylenglykol, 1,3-Butylenglykol, Ethylglykol, Dipropylenglykolmonomethylether.

Aromatische Alkohole wie Benzylalkohol.

Carbonsäureester, wie z.B. Ethylacetat, Benzylbenzoat, Butylacetat, Propylencarbonat, Milchsäureethylester.

Aliphatische Kohlenwasserstoffe, Öle, die nicht unter die Definition der spreitenden Öle fallen, wie z.B. Baumwollsaatöl, Erdnußöl, Maiskernöl, Olivenöl, Ricinusöl, Sesamöl.

Ketone, wie z.B. Aceton und Methylethylketon.

Synth. Mono-und Triglyceride mit natürlichen Fettsäuren.

Weiterhin sind u.a. Verbindungen wie Dimethylsulfoxid, Dimethylacetamid, Dimethylformamid, N-Methylpyrolidon, Dioxan, 2-Dimethyl-4-oxymethyl-1,3-dioxalan gut als Verdünnungsmittel geeignet.

Besonders geeignet sind niedere Alkohole mit bis zu 8 Kohlenstoffatomen im Molekül, sowie niedere Ketone wie Methylethylketon und Ether des Ethylenglykols und des Propylenglykols.

Es können bei der Herstellung der erfindungsgemäß verwendbaren Mittel ein oder mehrere Verdünnungsmittel eingesetzt werden.

Als weitere Hilfsstoffe sind geeignet:

a) Haftvermittler, z.B. Carboxmethylcellulose, Methylcellulose und andere Celllose-und Stärke-Derivate, Polyacrylate, Alginate, Gelatine, Gummiarabicum, Polyvinylpyrrolidon, Polyvinylalkohol, Copolymere aus Methylvinylether und Maleinsäureanhydrid, Polyethylenglykole, Paraffine, Öle, Wachse, hydriertes Rizinusöl.

Kolloidale Kieselsäure oder Gemische der aufgeführten Stoffe. Lösungen und Emulgatoren können neben dem Wirkstoff die üblichen Trägerstoffe enthalten, wie

b) Tenside (beinhaltet Emulgatoren und Netzmittel), z.B.

1. anionaktive, wie Na-Laurylsulfat, Fettalkoholethersulfate,

Mono/Dialkylpolyglykoletherorthophosphorsäureester-Monoethanolaminsalz, Calciumalkylarylsulfonat,

2. kationaktive, wie Cethyltrimethylammoniumchlorid,

3. ampholytische, wie Di-Na-N-lauryl-:-iminodipropionat oder Lecithin,

4. nicht ionogene, z.B. polyoxyethyliertes Ricinusöl, polyoxyethyliertes Sorbitan-Monooleat, Sorbitan-Monostearat, Glycerinmonostearat, Polyoxyethylenstearat, Alkylphenolpolyglykolether.

c) Spreitmittel wie z.B.

Silikonöle verschiedener Viskosität

Fettsäureester wie Ethylstearat, Di-n-butyl-adipat, Laurinsäurehexylester, Dipropylen-glykolpelargonat, Ester einer verzweigten Fettsäure mittlerer Kettenlänge mit gesättigten Fettalkoholen $C_{16}$-$C_{18}$, Isopropylmyristat, Isopropylpalmitat, Capryl/Caprinsäureester von gesättigten Fettalkoholen der Kettenlänge $C_{12}$-$C_{18}$, Isopropylstearat, Ölsäureoleylester, Ölsäuredecylester, Ethyloleat, Milchsäureethylester, wachsartige Fettsäureester wie künstliches Entenbürzeldrüsenfett, Dibutylphthalat, Adipinsäurediisopropylester, letzterem verwandte Estergemische u.a.

Triglyceride wie Capryl/Caprinsäuretriglycerid, Triglyceridgemische mit Pflanzenfettsäuren der Kettenlänge $C_8$-$C_{12}$ oder anderen speziell ausgewählten natürlichen Fettsäuren, Partialglyceridgemische gesättigter oder ungesättigter evtl. auch hydroxylgruppenhaltige Fettsäuren, Monodiglyceride der $C_8$/$C_{10}$-Fettsäuren und andere.

Fettalkohole wie Isotridecylalkohol, 2-Octyldodecanol, Cetylstearylalkohol, Oleylalkohol.

Fettsäuren wie z.B. Ölsäure.

Besonders gut geeignete spreitende Öle sind die folgenden;

Isopropylmyristat, Isopropylpalmitat, Capryl/Caprinsäureester von gesättigten Fettalkoholen der Kettenlänge $C_{12}$-$C_{18}$, wachsartige Fettsäureester wie künstliches Entenbürzeldrüsenfett.

Als Mittel für das erfindungsgemäße Verfahren kommen jedoch auch übliche Suspensions-und Emulsionskonzentrate in Frage, die vor Gebrauch mit Wasser auf die gewünschte Anwendungskonzentrate verdünnt werden. Die Anwendungskonzention des oder der Wirkstoffe liegt bei 0,1-10 %, bevorzugt bei 0,1-5 %. In der Formulierung liegt der oder die Wirkstoffe in Konzentrationen zwischen 5 und 80 %, vor bevorzugt zwischen 10 und 60 %.

Diese Formulierungen werden in bekannter Weise hergestellt, z.B. durch Vermischen des Wirkstoffs mit Streckmitteln, also flüssigen Lösungsmitteln, gegebenenfalls unter Verwendung von oberflächenaktiven Mitteln, also Emulgiermitteln und/oder Dispergiermitteln und/oder - schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; als Emulgier-und/oder schaumerzeugende Mittel kommen in Frage: z.B. nichtionogene und anionische Emulgatoren, wie Polyoxyethylen-Fettesäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide, Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe enthalten sein.

Als Mittel für das erfindunsgemäße Verfahren kommen auch wasserhaltige Mikroemulsionen in Frage. Solche enthalten 0,1-10 % Wirkstoff, 1-30 % eines oberflächenaktiven Mittels, gegebenenfalls 20-70 % eines mit Wasser mischbaren Verdünnungsmittels sowie gegebenenfalls 0-5 % Hilfsmittel, wobei der Rest aus Wasser besteht.

Als oberflächenaktive Mittel seien genannt: nicht-ionische, wasserlösliche Emulgatoren mit einem HLB (hydrophilic/lipophilic/balance-Wert) größer als 10, z.B. W ® (Bayer AG), Alkylarylpolyglykolether, Emulgator NP 10 ® (Bayer AG), Alkylarylpolyglykolether; Renex 678 ® (Atlas Chemical Industries), Polyoxyethylenalkylarylether; Tween 40 ® - (Atlas), Polyoxyethylensorbitanmonopalmitat; Myri 53 ® (Atlas), Polyoxyethylenstearat; Atlas G 3707 ®, Polyoxyethylenlaurylether; Atlas G 3920 ®, Polyoxyethylene oleylether; Atlas G 9046 T ®, Polyoxyethylenmannitanmonolaurat; Emulgator 1371 B ® (Bayer AG), Alkylpolyglykolether; Emulgator 1736 ® (Bayer AG), Alkylpolyglykolether - (Oleylpolyglykolether); Emulgator OX ® (Bayer AG), Alkylpolyglykolether (Dodecylpolyglykolether); Ninox BM-2 ® (Stepan Chemical Co.), ethoxyliertes Nonylphenol; Triton X-100 ® (Rohm an Haas Co.), Isooctylphenolpolyethoxyethanol; Cremophor EL ®.

Als Lösungsmittel seien gennant: Methanol, Ethanol, Propanol, vorzugsweise Isopropanol, Dimethylsulfoxid, Dimethylsulfoxid, Dimethylformamid, Glycerine, Ethylenglykolmonomethylether, Diethylglykolmonomethylether (Methoxyethoxyethanol, Methyl carbitol), Polyethylenglykole, Propylenglykole, Polypropylenglykole sowie Ketone wie Aceton und Methylethylketon.

Die Mittel werden hergestellt durch Lösen des oder der Wirkstoffe in einem Emulgator oder in einem Emulgator-Lösungsmittelgemisch unter Erwärmung, falls notwendig, und durch Zugabe des erforderlichen Anteils Wasser unter Rühren. Eine besondere Homogenisierungsvorrichtung ist nicht erforderlich.

Aus den folgenden Beispielen geht die überlegene Wirkung der erfindungsgemäßen pour-on Formulierungen hervor.

So ist eine Formulierung mit Cyfluthrin einer Formulierung mit Permethrin als Wirkstoff hinsichtlich der Dauerwirkung, der Schnelligkeit des Wirkungseintritts und der Wirkhöhe überlegen. Eine Formulierung mit Fenfluthrin ist einer Formulierung mit Permethrin als Wirkstoff in Hinblick auf die Schnelligkeit des Wirkungseintritts und der Wirkhöhe überlegen.

Die erfindungsgemäßen pour-on Formulierungen können wegen der Schnelligkeit des Wirkungseintritts mit gutem Erfolg gegen nur kurzzeitig auf dem Wirtstier (Pferd, Rind, Schwein usw.) verweilende Parasiten wie stechende und leckende Fliegen eingesetzt werden. Dies war überraschend.

Weiterhin ist überraschend, daß die erfindungsgemäßen pour-on Formulierungen eine langanhaltende Wirkung aufweisen, so daß sie ebenfalls mit Erfolg als Präparat mit guter Dauerwirkung gegen stechende und saugende Fliegen der obengenannten Wirtstierarten eingesetzt werden können. Dies trifft ganz besonders für pour-on Formulierungen zu die Cyfluthrin als alleinigen Wirkstoff oder in Mischung mit Fenfluthrin enthalten.

Beispiel

Test mit parasitierenden, adulten Stechfliegen - (Stomoxys Calcitrans)

Lösungsmittel: Alkylarylpolyglycolether

Zur Herstellung einer pour-on Formulierung vermischt man den Wirkstoff mit dem angegebenen Lösungsmittel im Verhältnis 1:2 und verdünnt das so erhaltene Konzentrat mit Wasser auf die gewünschte Konzentration.

10 adulte Stechfliegen (Stomoxys calcitrans) werden in Petrischalen, die Sandwiches enthalten, die 1 bis 14 Tage vor Versuchsbeginn mit 1 ml der zu testenden Wirkstoffzubereitung durchtränkt wurden, gebracht. Zu verschiedenen Zeiten nach Aufsetzen der Fliegen (5' bis 6 h) wird der Abtötungsgrad in Prozent bestimmt, wobei 100 % bedeuten, daß alle und 0 %, daß keine Fliegen abgetötet worden sind.

Test mit Adulten von Stomoxys calcitrans

| Wirkstoff | Konz. % a.i. | Aufbewahrungszeit der imprägnierten Filterpapierscheiben | Prozentsatz irreversibel geschädigter Fliegen nach angegebenen Minuten nach Aufsetzen der Fliegen 5' | 10' | 15' |
|---|---|---|---|---|---|
| Cyfluthrin | 0,01 | 1 d | 60 | 100 | 100 |
| | | 7 d | 70 | 100 | 100 |
| | | 14 d | 50 | 100 | 100 |
| Fenfluthrin | 0,01 | 1 d | 100 | 100 | 100 |
| | | 7 d | 100 | 100 | 100 |
| | | 14 d | 0 | 40 | 100 |
| Permethrin | 0,01 | 1 d | 20 | 80 | 100 |
| | | 7 d | 0 | 50 | 80 |
| | | 14 d | 0 | 0 | 0 |
| Cyfluthrin | 0,001 | 1 d | 30 | 40 | 70 |
| | | 7 d | 40 | 80 | 80 |
| | | 14 d | 10 | 10 | 60 |
| Fenfluthrin | 0,001 | 1 d | 20 | 60 | 80 |
| | | 7 d | 20 | 50 | 90 |
| | | 14 d | 0 | 0 | 10 |
| Permethrin | 0,001 | 1 d | 0 | 0 | 20 |
| | | 7 d | 0 | 0 | 0 |
| | | 14 d | 0 | 0 | 0 |

Formulierungsbeispiele:

Beispiel 1

| | |
|---|---|
| Cyfluthrin | 25,0 g |
| Calciumphenylsulfonat | 8,0 g |
| Alklarylpolyglykolether | 15,0 g |
| hochsiedende Erdölfraktion Solvesso 200® | ad 100 ml |

Die so zusammengesetzte Formulierung wird vor der Anwendung im Verhältnis 1:10 mit Wasser verdünnt und im pour-on Verfahren ausgebracht.

Beispiel 2

| | |
|---|---|
| Cyfluthrin | 6,0 g |
| Butanol | 10,0 g |
| Nonylphenolethoxylat | 15,0 g |
| Natriumalkylbenzolsulfonat | 4,0 g |
| Wasser | ad 100 ml |

Die so zusammengesetzte Formulierung wird vor der Anwendung im Verhältnis 1:6 mit Wasser weiter verdünnt und im pour-on Verfahren ausgebracht.

Beispiel 3

| | |
|---|---|
| Cyflutrhin | 40,0 g |
| Polyoxyethylen-sorbitan-fettsäureester | 5,0 g |
| ligninsulfonsaures Natrium | 7,0 g |
| kolloidale Kieselsäure | 32,0 g |
| Kaolin | 16,0 g |

Die Komponenten werden gut vermischt und dann gemahlen. Vor Gebrauch wird die Formulierung in Wasser im Gewichts-Verhältnis 1:40 dispergiert und im pour-on Verfahren ausgebracht.

Beispiel 4

| | |
|---|---|
| Cyfluthrin | 1,0 g |
| hochsiedende Erdölfraktion Solvesso 200® | 6,0 g |
| Calciumphenylsulfonat | 6,0 g |
| Polyethylenglykolfettsäureether | 9,0 g |
| Wasser | ad 100 ml |

Die so zusammengesetzte Formulierung wird ohne weitere Verdünnung im pour-on Verfahren ausgebracht.

Beispiel 5

| | |
|---|---|
| Cyfluthrin | 3,0 g |
| Nonylphenylpolyglykolether | 10,0 g |
| Dipropylenglykolmonomethylether | ad 100 ml |

Die so zusammengesetzte Formulierung wird ohne weitere Verdünnung im pour-on Verfahren ausgebracht.

Beispiel 6

| | |
|---|---|
| Cyfluthrin | 2,0 g |
| 2-Octyldodecanol | 20,0 g |
| Paraffinöl lt. Europ. Pharmakopoe | ad 100 ml |

Die so zusammengesetzte Formulierung wird ohne weitere Verdünnung im pour-on Verfahren ausgebracht.

Beispiel 7

| | |
|---|---|
| Cyfluthrin | 0,5 g |
| Silikonöl | 30,0 g |
| Butylacetat | ad 100 ml |

Die so zusammengesetzte Formulierung wird ohne weitere Verdünnung im pour-on Verfahren ausgebracht.

Beispiel 8

| | |
|---|---|
| Cyfluthrin | 0,5 g |
| Ethylstearat | 20,0 g |
| Isopropanol | ad 100 ml |

Die so zusammengesetzte Formulierung wird ohne weitere Verdünnung im pour-on Verfahren ausgebracht.

**Ansprüche**

1. Verfahren zum Freihalten von Stall-und Weidetieren von Fliegen, dadurch gekennzeichnet, daß man die Stall-und Weidetiere im Aufgießverfahren mit einem Mittel behandelt, das 2,2-Dimethyl-3-(2,2-dichlorvinyl)-cyclopropan-1-carbonsäure-α-cyano-(3-phenoxy-4-fluor)-benzylester (Cyfluthrin) seine Isomeren, Enantiomeren oder ihre Gemische und/oder 2,2-Dimethyl-3-(2,2-dichlorvinyl)-cyclopropan-1-carbonsäure-pentafluorbenzylester (Fenfluthrin) seine Enantiomeren oder ihre Gemische neben einem oder mehreren hautverträglichen Verdünnungsmitteln, gegebenenfalls in Gegenwart von Emulgatoren und weiteren Hilfsstoffen enthält.

2. Verfahren gemäß Anspruch 1, dadurch gekennzeichnet, daß der Wirkstoffgehalt des Mittels 0,01-10 % beträgt.